# EUROPEAN PATENT SPECIFICATION

(11) **EP 2 228 886 B1**
(45) Date of publication and mention of the grant of the patent: **04.05.2016**
(21) Application number: 09305232.2
(22) Date of filing: 13.03.2009
(51) Int. Cl.: H02K 7/00, H02K 1/02, H02K 11/00

(54) **Electric motor**
Elektrischer Motor
Moteur électrique

(43) Date of publication of application: 15.09.2010
(73) Proprietor: Dunkermotoren GmbH, 79848 Bonndorf (DE)
(72) Inventor: Nägele, Andreas, 79793 Wutöschingen (DE)
(74) Representative: DREISS Patentanwälte PartG mbB

(56) References cited:
- EP-A2- 2 107 669
- WO-A1-2007/012370
- JP-A- 7 177 690
- JP-A- 2005 124 259
- JP-A- 2005 124 259
- US-A1- 2003 090 170
- US-A1- 2006 006 744
- US-A1- 2008 185 928

## Description

The invention relates to an electric motor according to the preamble of claim 1.

For various reasons it is common to combine the rotor part of an electric motor with a position sensor to sense the actual angular position of the rotor or to derive the actual speed therefrom. As optical sensors are prone to get dirty, in such motors magnetic sensors are widely used. Often a permanent magnet is affixed to the shaft and rotates therewith, and a magnetic sensitive sensor like a Hall sensor senses the angular position of said permanent magnet.

But in electric motors necessarily other magnetic fields, and even stronger magnetic fields, are present. Though such magnetic fields should be concentrated between the poles of the rotor and the stator, a strong stray magnetic field is always present. A strong coupling between the mentioned magnetic fields is caused by the linking shaft that commonly is made out of steel.

As the poles of the rotor are made out of rotor sheets affixed to the shaft in a press fit manner carrying the whole turning moment of the motor, the use of shafts out of brass or plastics is impossible here.

JP 2005-124259 discloses an electric motor according to the preamble of claim 1.

According to the invention the shaft is made out of non-magnetic steel, thus on the one hand having the full mechanic properties and on the other hand magnetically uncoupling rotor and sensor.

In addition to the use of non-magnetic steel the diameter of the shaft part leading to the magnetic position sensor may be reduced, as this part does not carry any turning moment.

Further embodiments of the invention are to be found in the accompanying description.

In the following the invention will be described with the aid of the accompanying drawing.

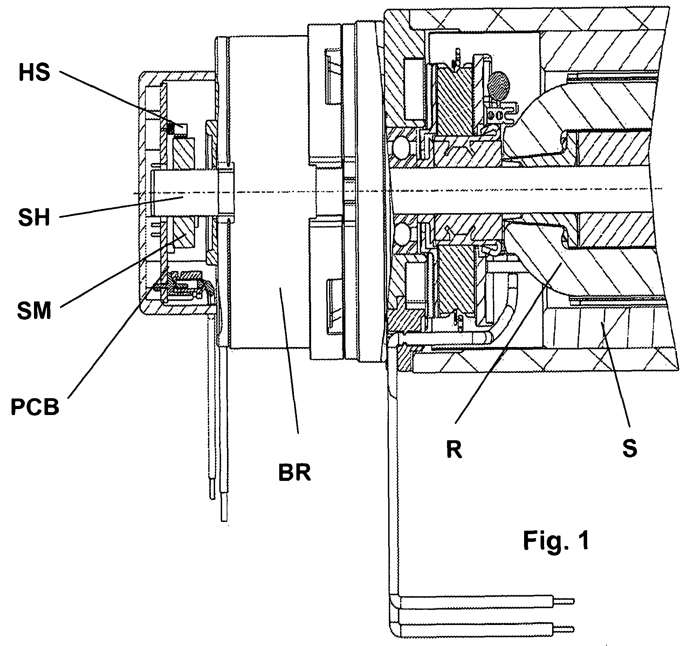

Figure 1 shows a part of an electric motor according to the invention with a rotor according to the invention. Figure 1 partially is a cross-section and partially a side-view.

Based on figure 1 first the starting point is described. At the right-hand side we see a part of the proper motor in a cross-sectional view. With "proper motor" here is meant a motor without optional parts like gear, brakes, control electronics, and the like. The part of the motor not shown here is not influenced by the invention. At the left thereof a part is shown in a closed or side-view, that in the embodiment leading to the invention includes a brake BR. At the left-hand side we see a cross-section of a housing part including a position sensor. Each of these parts is housed in separate housing parts, here also with different diameters.

The proper motor here is showing inter alia a rotor R, a stator S, and a shaft SH.

The position sensor includes a sensor magnet SM affixed to the end of the shaft SH and a printed circuit board PCB with a Hall Sensor HS affixed thereon.

We also see connection leads to the motor part, in the middle of the figure, and to the Hall Sensor HS, bottom left.

For various purposes electric motors carry position sensors for sensing the angular position of the shaft. Mostly such position sensors include at least one permanent magnet, the then so-called sensor magnet, and at least one magnetic sensor, mostly a Hall Sensor. The sensing of the position of the sensor magnet is influenced by the magnetic field between rotor and stator of the motor. In case of using a brake BR arranged between the motor part and the sensor part, an additional magnetic field is influencing the position sensing.

Though it is not unusual to have metallic walls between the different parts of such motor, effects of such magnets onto magnetic fields in other parts by stray magnetic fields mainly are caused by the shafts normally built out of steel.

An obvious idea to avoid such stray magnetic fields would be to build the shafts out of brass that is not leading magnetic fields. Brass mostly would be sufficient to carry the torsional moment of such motor, but is not hard enough to resist to the forces of the rotor sheets forced thereon. The same would apply to plastic material even more. The use of shafts composed of parts of steel and parts of other material, whether as integrated or as separated parts could solve the problem, but is costly.

That is why according to the invention a shaft out of non-magnetic steel is used.

As an example not falling within the scope of the invention, a further possibility of decoupling the magnetic field of rotor R and stator S and that of the sensor magnet SM is to reduce the diameter of the shaft SH carrying the sensor magnet SM.

## Claims

1. Electric motor comprising a stator (S), a rotor (R) connected to a shaft (SH), and a magnetic position sensor including a sensor magnet (SM), the sensor magnet (SM) being affixed to the shaft (SH), wherein rotor sheets are forced on the shaft (SH), and the shaft (SH) is made of non-magnetic steel thus magnetically uncoupling the rotor and the magnetic position sensor, **characterized in that** the position sensor further comprises a printed circuit board (PCB), wherein said printed circuit board (PCB) comprises an opening for receiving an axial end section of said shaft (SH), wherein a Hall sensor (HS) is affixed on said printed circuit board (PCB), wherein said Hall sensor is arranged radially outwards of said sensor magnet (SM), and wherein a surface of the printed circuit board (PCB) is arranged substantially perpendicular to a longitudinal axis of said shaft (SH), wherein said sensor magnet (SM) is affixed directly to the shaft (SH), wherein said sensor magnet (SM) comprises circular ring shape, wherein said circular ring shape comprises a basically rectangular cross-section, wherein a pot-shaped housing part is provided around said position sensor, wherein the printed circuit board (PCB) is connected to and supported by said housing part, wherein connection leads to the Hall sensor are connected to the printed circuit board (PCB).

2. Electric motor according to claim 1, wherein a brake (BR) is located in between the stator (S) and the magnetic position sensor.

## Patentansprüche

1. Elektromotor, der einen Ständer (S), einen mit einer Welle (SH) verbundenen Läufer (R) und einen magnetischen Stellungssensor mit einem Sensormagnet (SM), welcher Sensormagnet (SM) an der Welle (SH) befestigt ist, aufweist, wobei Läuferbleche auf die Welle (SH) gezwungen werden und die Welle (SH) aus nichtmagnetischem Stahl hergestellt ist, sodass sie den Läufer und den magnetischen Stellungssensor magnetisch trennt, **dadurch gekennzeichnet, dass** der Stellungssensor ferner eine gedruckte Leiterplatte (PCB) aufweist, wobei die gedruckte Leiterplatte (PCB) eine Öffnung zum Aufnehmen eines axialen Endabschnitts der Welle (SH) aufweist, wobei ein Hall-Sensor (HS) an der gedruckten Leiterplatte (PCB) befestigt ist, wobei der Hall-Sensor radial auswärts vom Sensormagnet (SM) angeordnet ist und wobei eine Oberfläche der gedruckten Leiterplatte (PCB) im Wesentlichen lotrecht zu einer Längsachse der Welle (SH) angeordnet ist, wobei der Sensormagnet (SM) direkt an der Welle (SH) befestigt ist, wobei der Sensormagnet (SM) eine kreisartige Ringform hat, wobei die kreisartige Ringform einen im Grunde rechtwinkligen Querschnitt hat, wobei ein topfförmiger Gehäuseteil um den Stellungssensor vorgesehen ist, wobei die gedruckte Leiterplatte (PCB) mit dem Gehäuseteil verbunden ist und von ihm gehalten wird, wobei Verbindungsleiter zum Hall-Sensor mit der gedruckten Leiterplatte (PCB) verbunden sind.

2. Elektromotor nach Anspruch 1, wobei eine Bremse (BR) sich zwischen dem Ständer (S) und dem magnetischen Stellungssensor befindet.

## Revendications

1. Moteur électrique comprenant un stator (S), un rotor (R) couplé à un arbre (SH), et un détecteur de position magnétique comprenant un aimant de détection (SM), l'aimant de détection (SM) étant fixé sur l'arbre (SH), dans lequel des pales de rotor sont installées par force sur l'arbre (SH), et l'arbre (SH) est constitué d'un acier non magnétique, ce qui découple magnétiquement le rotor et le détecteur de position magnétique, **caractérisé en ce que** le détecteur de position comprend en outre une carte à circuit imprimé (PCB), dans lequel ladite carte à circuit imprimé (PCB) comprend une ouverture lui permettant de recevoir une section d'extrémité axiale dudit arbre (SH), dans lequel un capteur à effet Hall (HS) est fixé sur ladite carte à circuit imprimé (PCB), dans lequel ledit capteur à effet Hall (HS) est agencé radialement vers l'extérieur dudit aimant de détection (SM), et dans lequel une surface de la carte à circuit imprimé (PCB) est agencée sensiblement perpendiculairement à un axe longitudinal dudit arbre (SH), dans lequel ledit aimant de détection (SM) est fixé directement sur l'arbre (SH), dans lequel ledit aimant de détection (SM) comprend une forme d'anneau circulaire, dans lequel la forme d'anneau circulaire comprend une section transversale essentiellement rectangulaire, dans lequel une partie de boîtier ayant la forme d'un pot est installée autour dudit détecteur de position, dans lequel la carte à circuit imprimé (PCB) est connectée à, et supportée par, ladite partie de boîtier, dans lequel les câbles électriques de connexion au capteur à effet Hall (HS) sont connectés à la carte à circuit imprimé (PCB).

2. Moteur électrique selon la revendication 1, dans lequel un frein (BR) est situé entre le stator (S) et le détecteur de position magnétique.
